# EUROPÄISCHE PATENTANMELDUNG

(11) **EP 2 245 969 A1**
(43) Veröffentlichungstag der Anmeldung: **03.11.2010**
(21) Anmeldenummer: 09405073.9
(22) Anmeldetag: 30.04.2009
(51) Int. Cl.: A47J 31/44

(54) **Andocksystem für einen Milchbehälter**

(71) Anmelder: Jura Elektroapparate AG, 4626 Niederbuchsiten (CH)
(72) Erfinder: Ullmann, Erich, 4622 Egerkingen (CH); Büttiker, Philipp, 4625 Oberbuchsiten (CH)
(74) Vertreter: EGLI-EUROPEAN PATENT ATTORNEYS

(57) **Zusammenfassung**

Die Erfindung betrifft ein Andocksystem (10) für einen Milchbehälter (20), mit einem Andockstück (11), das zum Andocken an den Behälter (20) vertikal beweglich geführt ist, und das wenigstens eine Öffnung (12, 12') zum Aufnehmen der Milch (M) aufweist, wobei die jeweilige Öffnung (12, 12') (12, 12') an dessen Unterseite (13) ausgebildet ist, und das wenigstens ein Anschlusselement (14, 14') zum Entnehmen der Milch (M) aufweist, wobei jeweils eines der jeweiligen Anschlusselemente (14, 14') mit jeweils einer der jeweiligen Öffnungen (12, 12') über eine zugehörige Flüssigkeitsleitung (15, 15') kommuniziert. Der Milchbehälter (20) weist einen Grundbehälter (21) und einen darauf platzierbaren Deckel (22) auf, der wenigstens ein Rohrelement (23, 23') aufweist, wobei das jeweilige Rohrelement (23, 23') - vom Deckel (22) ausgehend - in den Grundbehälter (21) hinein reicht, wenn der Deckel (22) auf dem Grundbehälter (21) platziert ist, und wobei das jeweilige Rohrelement (23, 23') mit jeweils einer Öffnung (24, 24') an einer Oberseite (25) des Deckels (22) kommuniziert, welche Öffnung (24, 24') von einer jeweils zugehörigen elastischen Dichtmanschette (26, 26') umfasst wird.

## Beschreibung

Die Erfindung betrifft das technische Gebiet der Kaffeemaschinen und insbesondere das Gebiet der Bereitstellung von Milch für ein Kaffeegetränk.

Kaffeemaschinen, die den Bezug von verschiedenen Milchprodukten wie z.B. Macchiato, Cappuccino, Milchkaffee usw. erlauben, benötigen für die Zuführung der Milch eine sichere, dichte und unterbruchfreie Verbindung mit der in einem Vorratsbehälter gelagerten Milch.

Auf Grund der Notwendigkeit, die Milch gekühlt zu lagern, ergeben sich zwei Möglichkeiten für den Milchbezug.

Wenn Milchprodukte nur gelegentlich bezogen werden, kann es sinnvoll sein, den Milchbehälter in gekühlter Umgebung, vorzugsweise in einem Kühlschrank zu lagern. Er wird nur bei Bedarf hervorgeholt und neben die Kaffeemaschine gestellt. Der Anschluss an die Maschine kann durch Eintauchen eines Saugschlauches in den Behälter vorgenommen werden. Danach wird der Milchbehälter wieder entfernt und die mit Milch in Berührung gekommenen Teile müssen gereinigt werden.

Wenn Milchprodukte allerdings dauerhaft, d.h. in relativ kurzen Zeitabständen bezogen werden sollen, ist es besser, wenn der Milchbehälter in einer beigestellten Kühleinheit permanent an der Maschine angeschlossen bleibt. Da sich Milchprodukte einer zunehmenden Beliebtheit erfreuen, wird diese Anordnung in Zukunft vermehrt zum Einsatz kommen.

Die letztgenannte Anordnung hat allerdings zur Folge, dass ein Anschliessen des Milchbehälters umständlicher wird, da die Leitung(en) durch die isolierende Hülle der Kühleinheit geführt werden müssen. Hinzu tritt, dass aus verschiedenen Gründen der Innenraum des Kühlers für eine vorgegebene Milchmenge so klein wie möglich gehalten wird. Die damit verbundenen Nachteile liegen in einer erschwerten Handhabung beim Einrichten für den Milchbezug wie auch für die Reinigung, in längeren Schlauchleitungen und somit Hygieneproblemen und erhöhter Störungsanfälligkeit.

Ein Vorteil der vorliegenden Erfindung besteht darin, dass eine schnelle Bereitstellung frischer Milch für ein Kaffeegetränk über einen langen Zeitraum hinweg auf einfache und kostengünstige Art und Weise gewährleistet ist.

Dies wird durch ein Andocksystem für einen Milchbehälter mit einem Andockstück nach Anspruch 1 erreicht.

Das erfindungsgemässe Andocksystem umfasst ein Andockstück, welches zum Andocken an den jeweiligen Milchbehälter vertikal beweglich geführt ist, und das wenigstens eine Öffnung zum Aufnehmen der Milch aufweist, wobei die jeweilige Öffnung an der Unterseite des Andockstücks ausgebildet ist. Weiterhin weist das Andockstück wenigstens ein Anschlusselement zum Entnehmen der Milch auf, wobei jeweils eines der jeweiligen Anschlusselemente mit jeweils einer der jeweiligen Öffnungen über eine zugehörige Flüssigkeitsleitung kommuniziert.

Ein wesentlicher Punkt der Erfindung besteht dabei in der vertikalen Beweglichkeit des Andockstücks. Dieses lässt eine schnelle Kopplung eines geeigneten Milchbehälters zu, indem das Andockstück einfach gegen den Behälter verfahren bzw. gedrückt wird. Über die jeweiligen unterseitigen Öffnungen des Andockstücks kann dann auf einfache Weise eine Flüssigkeitsverbindung zu der im Behälter befindlichen Milch hergestellt werden. Der Behälter kann damit z.B. in einem Kühlschrank bereitgehalten werden, und frische Milch wesentlich schneller als bisher gekannt angedockt bzw. abgedockt und dann wieder gekühlt oder nachgefüllt werden. Über die einzelnen Öffnungen des Andockstücks kann die Milch dabei unterschiedlichen Verarbeitungsprozessen zugeführt werden, die sich aus einem gewünschten Kaffeegetränk ergeben. So kann z.B. über eine Öffnung Milch zur Erzeugung von Milchschaum, über eine andere Öffnung Milch zur lediglichen Erhitzung und über eine weitere Öffnung Milch zur Zugabe von Geschmacksstoffen transportiert werden. Da die Milch über getrennte Flüssigkeitsleitungen befördert wird, ergeben sich weder Qualitätseinbussen noch Reinigungsprobleme, wie sie sich bei einer alternativen Verwendung eines Umschaltventils von einer Öffnung auf unterschiedliche Leitungen ergeben könnten.

Vorteilhafte Weiterbildungen des Andocksystems sind in den Unteransprüchen angegeben.

In einer bevorzugten Ausführungsform ist das Andocksystem mit einem Bedienmechanismus ausgestattet, der zum manuellen Bewegen des Andockstücks durch einen Nutzer ausgelegt ist. Dadurch wird eine besonders einfache, sichere und wartungsfreundliche Benutzung der Maschine möglich. Denkbar ist aber auch, den Bedienmechanismus elektromotorisch auszugestalten.

Um einen definierten Anpressdruck gegen den Milchbehälter herzustellen, ist das Andockelement bevorzugt gegen ein elastisch federndes Stellelement gelagert. Dadurch wird eine erforderliche Dichtheit der Verbindung zwischen dem Behälter und dem Andockstück gewährleistet.

Die Unterseite des Andockstücks, also die dem Milchbehälter zugewandte Seite des Andockstücks, ist bevorzugt als eine ebene Fläche ausgebildet, um die dichtende Anlage elastischer Dichtungselemente zwischen Andockstück und Milchbehälter zu ermöglichen. Die Unterseite des Andockstücks kann dazu auch selbst mit einer elastischen Schicht versehen sein.

Um die vertikale Beweglichkeit des Andockstücks auf besonders einfache konstruktive Art herzustellen, sind die Flüssigkeitsleitungen bevorzugt als elastische Schläuche ausgelegt, die sich zwischen der wenigstens einen verfahrbaren Öffnung des Andockstücks und einer raumfesten Lage des wenigstens einen Anschlusselements erstrecken.

Bei einer Ausführungsform des erfindungsgemässen Andocksystems umfasst das Andockstück zwei elektrische Leitungen, welche beim Andocken an den Milchbehälter in eine elektrische Verbindung mit dem Milchbehälter bringbar sind. Die elektrischen Leitungen des Andockstücks können beispielsweise so angeordnet sein, dass diese Leitungen beim Andocken des Andockstücks an den Milchbehälter jeweils in eine elektrische Verbindung mit entsprechenden Elektroden bzw. Kontakten am Milchbehälter gebracht werden. Auf diese Weise ist es möglich, über die elektrischen Leitungen des Andockstücks und die genannten Elektroden bzw. Kontakte am Milchbehälter elektrische Signale von Sensoren bzw. Messvorrichtungen zu erfassen, welche im bzw. am Milchbehälter angeordnet sein können. Die Sensoren bzw. Messvorrichtungen können beispielsweise dazu dienen, Messgrössen zu erfassen, welche den momentanen Zustand des Milchbehälters charakterisieren, um beispielsweise den Füllstand des Milchbehälters oder die Temperatur der Milch im Milchbehälter zu messen.

In einer Variante der vorstehend genannten Ausführungsform des erfindungsgemässen Andocksystems ist die jeweilige elektrische Leitung in oder an einer Wand einer der jeweiligen Flüssigkeitsleitungen ausgebildet. Diese Variante ermöglicht es, eine elektrische Verbindung mit dem Milchbehälter besonders Platz sparend und mit einfachen Mitteln zu realisieren.

Der Milchbehälter kann beispielsweise zwei Elektroden aufweisen, deren eines Ende jeweils in einen zur Aufnahme von Milch bestimmten Bereich im Innern des Milchbehälters ragt und deren anderes Ende derart angeordnet ist, dass beim Andocken des Andockstücks an den Milchbehälter eine elektrische Verbindung zwischen jeweils einer der elektrischen Leitungen des Andockstücks und einer der Elektroden hergestellt wird. In diesem Fall können nach dem Andocken des Andockstücks an den Milchbehälter über die elektrischen Leitungen des Andockstücks elektrische Messgrössen (z.B. elektrischer Widerstand, elektrische Spannung bzw. Stromstärke) bestimmt werden, welche über die Füllhöhe (Füllstand) von Milch im Milchbehälter relativ zu den Elektroden Auskunft geben.

Die vorstehend genannten Elektroden können auch jeweils als Rohrelement ausgebildet sein, welches zusätzlich als Leitung für Milch dient und so im bzw. am Milchbehälter angeordnet ist, dass nach dem Andocken des Andockstücks an den Milchbehälter eine für die Milch durchgängige Verbindung zwischen dem jeweiligen Rohrelement und einer der jeweiligen Flüssigkeitsleitungen im Andockstück hergestellt wird. Sind wenigstens zwei der Rohrelemente aus einem elektrisch leitfähigen Material ausgeführt, können diese nicht nur als Leitung für die aus dem Milchbehälter zu entnehmende Milch, sondern auch gleichzeitig zur Messung des Füllstandes verwendet werden.

Ein besonders guter elektrischer Kontakt zu entsprechenden elektrischen Leitungen des Andockstücks ist herstellbar, wenn die jeweiligen Rohrelemente wenigstens teilweise über die Oberseite eines Deckels des Milchbehälters hinaus ragen. Zur besonders einfachen Entnahme der Milch aus dem jeweiligen Milchbehälter ist bevorzugt eine Ansaugeinheit zum Ansaugen der Milch vorgesehen.

Obwohl der Milchbehälter schnell und einfach an das Andocksystem angedockt werden kann bzw. mit diesem koppelbar ist, kann es auch bevorzugt sein, eine Kühleinheit zum Aufnehmen des Milchbehälters vorzusehen. Der Milchbehälter muss dann nur noch zum Auffüllen frischer Milch oder zum Reinigen abgedockt werden. Ein weiterer Aufwand ist somit mit der Bereitstellung frischer Milch nicht mehr verbunden.

Der Vorteil der vorliegenden Erfindung wird auch durch eine Kaffeemaschine nach Anspruch 11 erzielt.

Ein wesentlicher Punkt der Kaffeemaschine besteht dabei darin, dass diese die Möglichkeit bietet, einen Milchbehälter auf einfache und schnelle Art anzudocken. Dabei kann das Andocksystem sowohl als integraler Teil der Kaffeemaschine ausgeführt oder auch über das wenigstens eine Anschlusselement lösbar mit der Kaffeemaschine verbindbar sein. Durch eine lösbare, insbesondere standardisierte Verbindung des wenigstens einen Anschlusselements mit der Kaffeemaschine wird ein Andocksystem zur Verfügung gestellt, das die Nachrüstung bereits vorhandener Kaffeemaschinen mit diesem Andocksystem erlaubt.

Der bereits genannte Vorteil der vorliegenden Erfindung wird zudem durch einen Milchbehälter nach Anspruch 12 erreicht.

Dieser Milchbehälter umfasst einen Grundbehälter und einen darauf platzierbaren Deckel, welcher Deckel wenigstens ein Rohrelement aufweist, wobei das jeweilige Rohrelement vom Deckel ausgehend in den Grundbehälter hinein reicht, wenn der Deckel auf dem Grundbehälter platziert ist, und das jeweilige Rohrelement mit jeweils einer Öffnung an einer Oberseite des Deckels kommuniziert, welche von einer jeweils zugehörigen elastischen Dichtmanschette umfasst wird.

Ein wesentlicher Punkt der Erfindung besteht dabei in dem besonders einfachen Aufbau des Behälters, der zum Entnehmen der Milch lediglich eines entsprechenden Deckels mit den besagten Rohrelementen und zugehöriger Dichtmanschetten bedarf. Ein solcher Deckel ist damit einfach und kostengünstig herstellbar sowie durch seine einfache Handhabbarkeit auch leicht zu reinigen.

Vorteilhafte Weiterbildungen des Milchbehälters sind in den Unteransprüchen angegeben.

Ein Vorteil entsteht dadurch, wenn das jeweilige Rohrelement lösbar mit dem Deckel verbunden werden kann. Die Rohrelemente sind damit aus hygienischen Gründen komplett auswechselbar oder auch leichter zu reinigen und wiederzuverwenden. Dazu können sie z.B. an den Deckel steckbar, klemmbar oder mit diesem verschraubbar sind. Die Rohrelemente können grundsätzlich in starrer oder elastischer Form ausgebildet sein, z.B. als Kunststoff- oder Metallröhrchen oder als Kunststoffschlauch.

Die Dichtmanschetten können grundsätzlich konventioneller Art sein und im Längsschnitt ein z.B. ringförmiges oder auch rechteckiges Profil aufweisen. Im Deckel des Milchbehälters kann eine entsprechende Nut zum Aufnehmen der Manschetten vorgesehen sein. Eine im Profil rechteckige Manschette lässt sich aber auch direkt an der Oberseite des Deckels verkleben. Gleich mehrere Vorteile entstehen aber dadurch, wenn die wenigstens eine Dichtmanschette die Form eines Trichters aufweist, der sich in einer Richtung öffnet, die von der Oberseite des Deckels weg weist. Eine solche Manschette zieht sich bei Beaufschlagung mit einem Ansaugdruck zum Transport der Milch sozusagen zusammen und erhöht den Anpressdruck auf eine gegenüberliegende Dichtfläche. Zudem werden nach Entkopplung des Milchbehälters Tropfen zurückfliessender Milch oder auch Reinigungsflüssigkeit in dem Trichter der Manschette aufgefangen und verschmutzen nicht den Deckel des Behälters. Darüber hinaus werden Lagetoleranzen des Behälters gegenüber den (Ansaug-)Öffnungen des Andocksystems ausgeglichen.

Derartig trichterförmige Dichtmanschetten sind besonders einfach an dem Deckel anzubringen, wenn das wenigstens eine der Rohrelemente den Deckel durchtritt und wenigstens teilweise über dessen Oberfläche hinaus ragt. Damit muss die Manschette lediglich so dimensioniert sein, dass sie auf das überstehende Rohrelement dichtend aufgesteckt werden kann.

Ein weiterer Vorteil ergibt sich aus der Materialwahl der Rohrelemente. Grundsätzlich wird eine Füllstandsmessung des Milchbehälters dann möglich, wenn wenigstens zwei der Rohrelemente aus einem elektrisch leitfähigen Material ausgeführt sind. Durch Kontaktierung der Rohrelemente von ausserhalb des Milchbehälters lassen sich diese als Elektroden verwenden, zwischen denen sich elektrische Kenngrössen wie Spannung oder Stromfluss messen lassen, die als Mass für die Eintauchlänge der Rohrelemente interpretierbar sind.

Der eingangs genannte Vorteil der vorliegenden Erfindung wird auch durch eine Kombination nach Anspruch 17 erzielt, die aus dem erfindungsgemässen Andocksystem und dem erfindungsgemässen Milchbehälter besteht.

Bei dieser Kombination sind das Andocksystem und der Milchbehälter so bemessen und aufeinander abgestimmt, dass in einem Andockzustand, bei dem die Unterseite des Andockstücks gegen die Oberseite des Deckels gedrückt ist, die jeweilige Öffnung des Andockstücks und jeweils eine der jeweiligen Öffnungen des Deckels über eine jeweils zugehörige, zwischen der Oberseite des Deckels und der Unterseite des Andockstücks liegende Dichtmanschette dicht miteinander verbunden ist.

Ein wesentlicher Punkt dieser Kombination besteht in der konstruktiv einfach gelösten Kopplung zwischen dem Andocksystem und dem Milchbehälter, die lediglich ein vertikal beweglich geführtes Andockstück und einen darauf abgestimmten Behälter erfordert. Dadurch wird der Behälter einerseits besonders schnell koppel- und entkoppelbar, andererseits kann er aber auch - in einer entsprechenden Kühleinheit aufgenommen - über lange Zeit angedockt bleiben, ohne Qualitätsverluste der Milch zu befürchten.

Vorteilhafte Weiterbildungen der Kombination sind in den Unteransprüchen angegeben.

Bevorzugt ist es danach, wenn in dem Andockzustand des Behälters wenigstens zwei Rohrelemente des Behälterdeckels mit dem Andockstück in elektrische Verbindung gebracht sind. Dies macht eine Füllstandsmessung des Behälterinhalts möglich, nach der z.B. das Ansaugverhalten einer Ansaugeinheit zum Ansaugen der Milch und zum Transportieren der Milch durch die jeweiligen Rohrelemente steuerbar ist. Bei zu niedrigem Füllstand kann z.B. das Ansaugen abgeschaltet und ein Signal ausgelöst werden, welches dem Nutzer anzeigt, dass der Behälter einer Auffüllung bedarf.

Dies kann insbesondere dann von Vorteil sein, wenn der Milchbehälter in einer Kühleinheit aufnehmbar ist, und sein Füllstand für längere Zeit unkontrolliert bleibt. Grundsätzlich kann der Milchbehälter aber auch aus einem transparenten Material ausgeführt sein, so dass sein Füllstand bei Entnahme oder beim kurzen Öffnen eines Zugangs zur Kühleinheit, oder auch über ein Sichtfenster der Einheit von ausserhalb kontrollierbar ist.

Der vorstehende Vorteil der vorliegenden Erfindung wird auch durch ein Verfahren zum Entnehmen von Milch aus einem erfindungsgemässen Milchbehälter mithilfe eines erfindungsgemässen Andocksystems nach Anspruch 21 erzielt, das sich durch seinen einfachen und effizienten Ablauf auszeichnet, und das konstruktiv besonders einfach und kostengünstig realisierbar ist.

Bei diesem Verfahren wird das Andockstück des jeweiligen Andocksystems zum Entnehmen von Milch aus dem jeweiligen

Milchbehälter gegen einen Deckel des Milchbehälters gedrückt, sodass die wenigstens eine Öffnung des Deckels über eine Dichtmanschette dicht mit der wenigstens einen Öffnung des Andockstücks verbunden wird, und ein Unterdruck erzeugt wird, der die Milch aus dem Milchbehälter über die so geschaffene Verbindung in das Andockstück strömen lässt.

Die vorliegende Erfindung wird im Folgenden anhand eines Ausführungsbeispiels unter Bezugnahme auf die beiliegenden Figuren näher erläutert. Gleiche oder gleichwirkende Teile sind mit gleichen Bezugsziffern bezeichnet. Es zeigen:
- Figur 1: eine quergeschnittene Ansicht eines Andocksystems für einen Milchbehälter mit einer Kühleinheit, in der sich der Behälter in einem entkoppelten Zu- stand befindet, und
- Figur 2: die Ansicht der Figur 1, bei welcher sich der Milchbehälter in einem gekoppelten bzw. angedock- ten Zustand befindet.

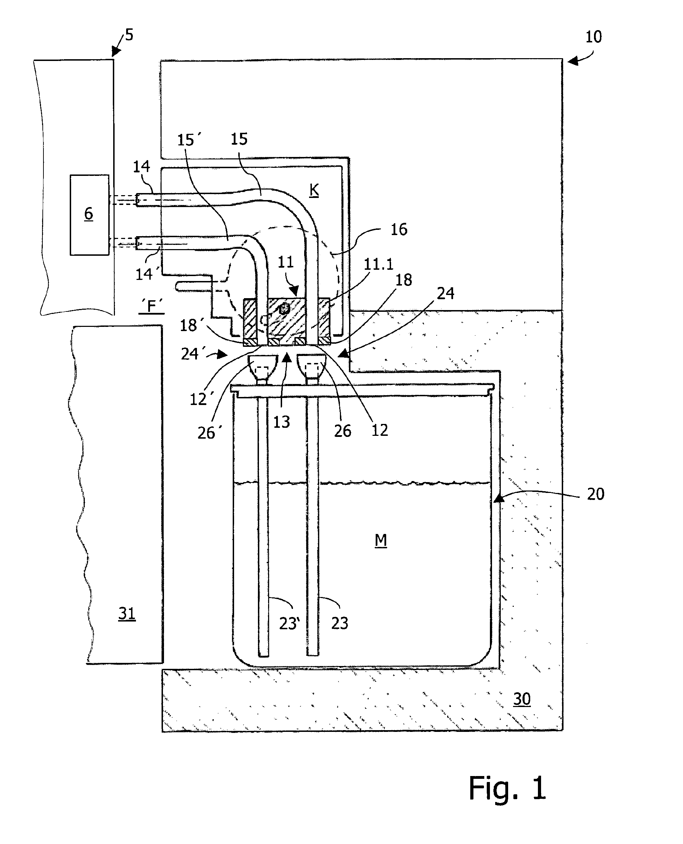

Die Figur 1 zeigt eine quergeschnittene Ansicht eines Andocksystems 10 für einen Milchbehälter 20 mit einer darunter angebrachten Kühleinheit 30, in der sich der Behälter 20 in einem entkoppelten Zustand F (Free) befindet. An einer Unterseite 13 eines vertikal beweglich geführten Andockstücks 11 sind dabei zwei Öffnungen 12, 12' zum Ansaugen von Milch M aus dem Behälter 20 vorgesehen. Die Öffnungen 12, 12' sind mit Anschlusselementen 14, 14' über flexible Flüssigkeitsleitungen 15, 15' verbunden, die sich gegenüber den raumfest angeordneten Anschlusselementen 14, 14' verformen, wenn das Andockstück 11 vertikal bewegt wird. Über die Anschlusselemente 14, 14' kann eine Kaffeemaschine mit dem Andocksystem 10 gekoppelt werden. Zur Bewegung des Andockstücks 11 in Richtung des Milchbehälters 20 ist ein Bedienmechanismus 16 vorgesehen, der einen Hebel aufweist, welcher an einer Kulisse geführt ist (beides nicht im Detail bezeichnet). Die Öffnungen 12, 12' des Andockstücks 11 sind dabei auf Öffnungen 24, 24' des Milchbehälters 20 ausgerichtet, und werden beim Herunterdrücken des Andockstücks 11 durch einen Nutzer mit diesen Öffnungen 24, 24' in eine (für Flüssigkeiten wie z.B. Milch) dichte Verbindung gebracht.

Der Milchbehälter 20 selbst wird über einen Zugang in der Kühleinheit 30 platziert, der von einer Tür 31 verschlossen werden kann. Aus Herstellungs- und Wartungsgründen ist das Andockstück 11 mit seinem Bedienmechanismus 16, den Flüssigkeitsleitungen 15, 15' und den Anschlusselementen 14, 14' in einer Kassetteneinheit K untergebracht.

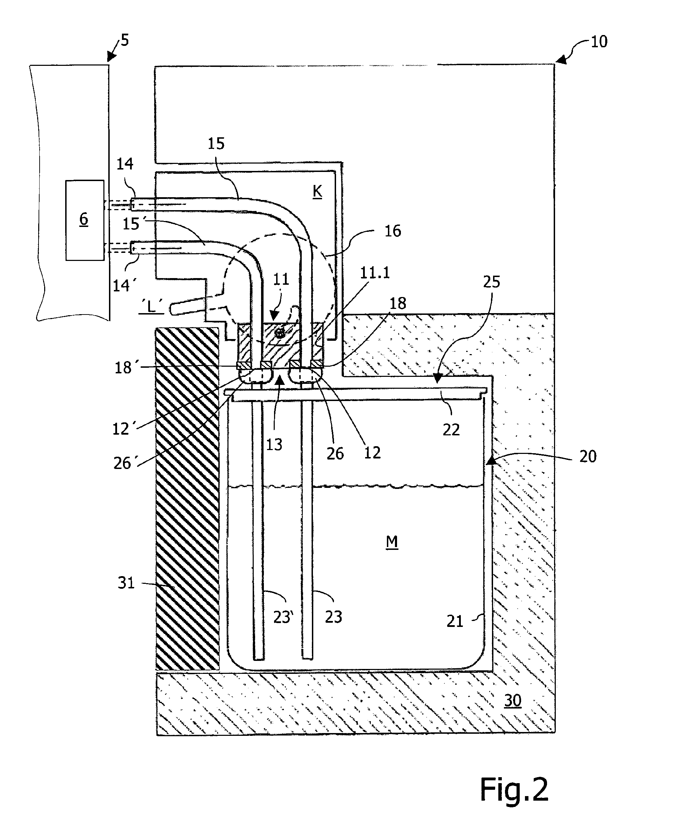

Die Figur 2 zeigt die Ansicht der Figur 1, bei welcher sich der Milchbehälter 20 in einem gekoppelten bzw. angedockten Zustand L (Locked) befindet. Durch Herunterdrücken des Andockstücks 11 in Richtung einer Oberfläche 25 eines Deckels 22 des Milchbehälters 20 werden dabei Dichtmanschetten (bzw. Tüllen) 26, 26' in dichten Kontakt mit der Unterseite 13 des Andockstücks 11 gebracht. Die Öffnungen 24, 24' im Deckel 22 des Behälters 20, die in diesem Beispiel durch den Deckel durchmessende Rohrelemente 23, 23' gebildet werden, kommunizieren nun flüssigkeitsdicht mit den Öffnungen 12, 12' des Andockstücks 11. Die an der Oberseite 25 des Deckels 22 überstehenden Enden der Rohrelemente 23, 23' werden hier zum Anbringen der Dichtmanschetten 26, 26' benutzt, welche an diesen Enden aufgesteckt sind. Die Dichtmanschetten 26, 26' sind dabei so ausgebildet, dass sie einerseits möglichst grosse vertikale Lagetoleranzen des Behälterdeckels 22 sowie des Andockstücks 11 aufnehmen können, und dabei sicher dicht bleiben sowie ein sauberes Zurückfliessen der Milch oder einer Reinigungsflüssigkeit in den Behälter 20 nach dem Entkoppeln des Andockstücks 11 gewährleisten.

Die Rohrelemente bzw. Saugrohre 23, 23' reichen dabei so tief wie möglich in einen Grundbehälter 21 des Milchbehälters 20 hinein, um das Milchvolumen auszuschöpfen. Die Tür 31 der Kühleinheit 30 ist nun zur dauerhaften Kühlung der Milch M geschlossen. Bei geöffneter Tür 31 kann der Milchbehälter in einer geradlinigen Bewegung in die Kühleinheit 30 eingeführt und aus dieser entnommen werden.

Das hier gezeigte Andocksystem 10 für einen Milchbehälter 20 ist über die Anschlusselemente 14, 14' mit einer Kaffeemaschine verbindbar und kann somit flexibel an bereits vorhandene Kaffeemaschinen angeschlossen werden. Es kann aber auch als integraler Teil einer Kaffeemaschine ausgeführt sein.

Im vorliegenden Beispiel gemäss Fig. 1 und 2 ist das Andocksystem 10 mit einer Kaffeemaschine 5 verbunden: Die Anschlusselemente 14 und 14' sind zu diesem Zweck an eine Ansaugeinheit 6 der Kaffeemaschine 5 angeschlossen. Mittels der Ansaugeinheit 6 kann - nach dem Andocken des Andockstücks 11 an den Milchbehälter 20 (Zustand L gemäss Fig. 2) - Milch aus dem Milchbehälter 20 über die Rohrelemente 23, 23' und die Flüssigkeitsleitungen 15, 15' angesaugt werden, um die angesaugte Milch einer weiteren Verarbeitung zuführen zu können. Die weitere Verarbeitung der angesaugten Milch kann innerhalb und/oder ausserhalb eines (in Fig. 1 und 2 nicht dargestellten) Gehäuses der Kaffeemaschine 5 erfolgen, wobei die über die Flüssigkeitsleitung 15 angesaugte Milch und die über die Flüssigkeitsleitung 15' angesaugte Milch auf jeweils gleiche oder auf verschiedene Weisen weiterverarbeitet werden können: die jeweils angesaugte Milch kann beispielsweise erwärmt oder mit Luft gemischt werden, um heisse Milch oder Milchschaum zu erzeugen.

Die Kassette K mit dem darin vorgesehenen Andockstück 11, den Elementen 14, 14', den Leitungen 15, 15' und der Bedienungsmechanik 16 kann fest oder zu Reinigungszwecken entnehmbar in dem Andocksystem 10 verbaut sein.

Da der Milchbehälter 20 sehr schnell mit dem Andocksystem 10 koppelbar ist, muss auch nicht notwendigerweise eine Kühleinheit 30 vorgesehen sein. Der Behälter kann alternativ auch in einem Kühlschrank bereitgestellt und nur von Zeit zu Zeit entnommen werden. In jedem Fall ist eine schnelle Bereitstellung frischer Milch für ein Kaffeegetränk über einen langen Zeitraum hinweg auf einfache und kostengünstige Art und Weise gewährleistet.

Wie Fig. 1 und 2 andeuten, kann das Andockstück 11 mehrteilig bzw. mehrschichtig aufgebaut sein: Das Andockstück 11 umfasst einen Grundkörper 11.1, an dessen Unterseite 13 im vorliegenden Beispiel zwei ebene Schichten 18 und 18' angeordnet sind. Die Schicht 18 ist an einer Wand der Flüssigkeitsleitung 15 angeordnet und umgibt die Öffnung 12, während die Schicht 18' an einer Wand der Flüssigkeitsleitung 15' angeordnet ist und die Öffnung 12' umgibt. Die Schichten 18 und 18' sind derart ausgebildet, dass sie beim Andocken des Andockstücks 11 an den Milchbehälter 20 (Zustand L gemäss Fig. 2) jeweils mit einem der Rohrelemente 23, 23' in Kontakt gebracht werden.

Die Schichten 18 und 18' können beispielsweise aus einem elastischen Material gebildet sein. Dies bewirkt, dass das Andocken des Andockstücks 11 an den Milchbehälter 20 geräuschlos verläuft, und erlaubt ein Andocken mit geringem Verschleiss für das Andockstück 11 und die Rohrelemente 23, 23'.

Die Schichten 18 und 18' können beispielsweise auch aus einem elektrisch leitfähigen Material gebildet sein. In diesem Fall können die Schichten 18 und 18' als elektrische Leitungen dienen, welche beim Andocken des Andockstücks 11 an den Milchbehälter 20 in eine elektrische Verbindung mit dem Milchbehälter 20 und insbesondere mit jeweils einem der Rohrelemente 23, 23' bringbar sind. Die Rohrelemente 23, 23' können ebenfalls aus einem elektrisch leitfähigen Material gebildet sein. In diesem Fall können nach dem Andocken des Andockstücks 11 an den Milchbehälter 20 die Rohrelemente 23, 23' über die Schichten 18 und 18' kontaktiert werden und mithilfe elektrischer Messungen zur Bestimmung der Füllhöhe der Milch relativ zu den Rohrelemente 23, 23' herangezogen werden, wie bereits erläutert wurde.

## Patentansprüche

1. Andocksystem (10) für einen Milchbehälter (20), mit einem Andockstück (11), das zum Andocken an den Milchbehälter (20) vertikal beweglich geführt ist, und das wenigstens eine Öffnung (12, 12') zum Aufnehmen der Milch (M) aufweist, wobei die jeweilige Öffnung (12, 12') an dessen Unterseite (13) ausgebildet ist, und das wenigstens ein Anschlusselement (14, 14') zum Entnehmen der Milch (M) aufweist, wobei jeweils eines der jeweiligen Anschlusselemente (14, 14') mit jeweils einer der jeweiligen Öffnungen (12, 12') über eine zugehörige Flüssigkeitsleitung (15, 15') kommuniziert.

2. Andocksystem (10) nach Anspruch 1, das mit einem Bedienmechanismus (16) ausgestattet ist, der zum manuellen Bewegen des Andockstücks (11) durch einen Nutzer ausgelegt ist.

3. Andocksystem (10) nach Anspruch 1 oder 2, bei welcher das Andockstück (11) gegen ein elastisch federndes Stellelement gelagert ist.

4. Andocksystem (10) nach einem der vorstehenden Ansprüche, bei welcher die Unterseite (13) des Andockstücks (11) als eine ebene Fläche ausgebildet ist.

5. Andocksystem (10) nach einem der vorstehenden Ansprüche, bei welcher die Unterseite (13) des Andockstücks (11) mit einer elastischen Schicht (18, 18') versehen ist.

6. Andocksystem (10) nach einem der vorstehenden Ansprüche, bei welcher die jeweilige Flüssigkeitsleitung (15, 15') als elastischer Schlauch ausgelegt ist.

7. Andocksystem (10) nach einem der Ansprüche 1-6, wobei das Andockstück (11) zwei elektrische Leitungen (18, 18') umfasst, welche beim Andocken an den Milchbehälter (20) in eine elektrische Verbindung mit dem Milchbehälter (20) bringbar sind.

8. Andocksystem nach Anspruch 7, wobei die jeweilige elektrische Leitung (18, 18') in oder an einer Wand einer der jeweiligen Flüssigkeitsleitungen (15, 15') ausgebildet ist.

9. Andocksystem (10) nach einem der vorstehenden Ansprüche, bei welcher eine Ansaugeinheit (6) zum Ansaugen der Milch (M) vorgesehen ist.

10. Andocksystem (10) nach einem der vorstehenden Ansprüche, mit einer Kühleinheit (30) zum Aufnehmen eines Milchbehälters (20).

11. Kaffeemaschine (5) mit einem Andocksystem (10) nach einem der vorstehenden Ansprüche, bei welcher das Andocksystem (10) als integraler Teil der Kaffeemaschine ausgeführt ist oder über das wenigstens eine Anschlusselement (14, 14') lösbar mit der Kaffeemaschine (5) verbunden werden kann.

12. Milchbehälter (20), mit einem Grundbehälter (21) und einem darauf platzierbaren Deckel (22), der wenigstens ein Rohrelement (23, 23') aufweist, wobei das jeweilige Rohrelement (23, 23') vom Deckel (22) ausgehend in den Grundbehälter (21) hinein reicht, wenn der Deckel (22) auf dem Grundbehälter (21) platziert ist, und das jeweilige Rohrelement (23, 23') mit jeweils einer Öffnung (24, 24') an einer Oberseite (25) des Deckels (22) kommuniziert, welche von einer jeweils zugehörigen elastischen Dichtmanschette (26, 26') umfasst wird.

13. Milchbehälter (20) nach Anspruch 12, bei dem das wenigstens eine der Rohrelemente (23, 23') lösbar mit dem Deckel (22) verbunden werden kann.

14. Milchbehälter (20) nach einem der Ansprüche 12 oder 13, bei dem die wenigstens eine Dichtmanschette (26, 26') die Form eines Trichters aufweist, der sich in einer Richtung öffnet, die von der Oberseite (25) des Deckels (22) weg weist.

15. Milchbehälter (20) nach einem der Ansprüche 12 bis 14, bei dem das wenigstens eine der Rohrelemente (23, 23') den Deckel (22) durchtritt und wenigstens teilweise über dessen Oberfläche (25) hinaus ragt.

16. Milchbehälter (20) nach einem der Ansprüche 12 bis 15, bei dem wenigstens zwei der Rohrelemente (23, 23') aus einem elektrisch leitfähigen Material ausgeführt sind.

17. Kombination aus einem Andocksystem (10) nach einem der Ansprüche 1 bis 10 mit einem Milchbehälter (20) nach einem der Ansprüche 12 bis 16, bei der das Andocksystem (10) und der Milchbehälter (20) so bemessen und aufeinander abgestimmt sind, dass in einem Andockzustand (L), bei dem die Unterseite (13) des Andockstücks (11) gegen die Oberseite (25) des Deckels (22) gedrückt ist, die jeweilige Öffnung (12, 12') des Andockstücks (11) und jeweils eine der jeweiligen Öffnungen (24, 24') des Deckels (22) über eine jeweils zugehörige, zwischen der Oberseite (25) des Deckels (22) und der Unterseite (13) des Andockstücks (11) liegende Dichtmanschette (26, 26') dicht miteinander verbunden sind.

18. Kombination nach Anspruch 17, bei der in dem Andockzustand (L) wenigstens zwei Rohrelemente (23, 23') des Deckels (22) mit dem Andockstück (11) in elektrische Verbindung gebracht sind.

19. Kombination nach Anspruch 18, wobei das Andockstück (11) zwei elektrische Leitungen umfasst und jede dieser Leitungen im Andockzustand (L) mit einem der jeweiligen Rohrelemente (23, 23') in eine elektrische Verbindung gebracht ist.

20. Kombination nach einem der Ansprüche 17-19, bei welcher der Milchbehälter (20) in eine Kühleinheit (30) aufnehmbar ist.

21. Verfahren zum Entnehmen von Milch (M) aus einem Milchbehälter (20) nach einem der Ansprüche 12 bis 16, mit einem Andocksystem (10) nach einem der Ansprüche 1 - 10, bei dem ein Andockstück (11) des Andocksystems (10) gegen einen Deckel (25) des Milchbehälters (20) gedrückt wird, so dass die wenigstens eine Öffnung (24, 24') des Deckels (22) über eine Dichtmanschette (26, 26') dicht mit der wenigstens einen Öffnung des Andockstücks verbunden wird, und ein Unterdruck erzeugt wird, der die Milch (M) aus dem Behälter (20) über die so geschaffene Verbindung in das Andockstück (11) strömen lässt.
